**Europäisches Patentamt**

**European Patent Office**

**Office européen des brevets**

(19)

(11) Veröffentlichungsnummer: **0 174 429**
**B1**

(12) **EUROPÄISCHE PATENTSCHRIFT**

(45) Veröffentlichungstag der Patentschrift:
29.03.89

(51) Int. Cl.⁴: **C 02 F 3/20**

(21) Anmeldenummer: **85104359.6**

(22) Anmeldetag: **10.04.85**

(54) **Vorrichtung zur Belüftung von Abwasser oder dgl. Medien in Belüftungsbecken.**

(30) Priorität: **12.09.84 EP 84710032**

(43) Veröffentlichungstag der Anmeldung:
**19.03.86 Patentblatt 86/12**

(45) Bekanntmachung des Hinweises auf die Patenterteilung:
**29.03.89 Patentblatt 89/13**

(84) Benannte Vertragsstaaten:
**AT BE CH DE FR GB IT LI LU NL SE**

(56) Entgegenhaltungen:
**DE-A-2 942 607**
**DE-A-3 316 140**
**DE-B-2 701 656**
**US-A-3 911 064**

(73) Patentinhaber: **Schüssler, Karl Heinz, Philipp- Reis-Strasse 18, D-6460 Gelnhausen (DE)**

(72) Erfinder: **Schüssler, Karl Heinz, Philipp- Reis-Strasse 18, D-6460 Gelnhausen (DE)**

(74) Vertreter: **Munderich, Paul, Dipl.- Ing., Frankfurter Strasse 84, D-6466 Gründau- Rothenbergen (DE)**

EP 0 174 429 B1

### Beschreibung

Die Erfindung betrifft eine Vorrichtung zur Flächenbelüftung, die insbesondere zur intermittierenden Belüftung aufgrund der bei fehlender oder geringer Gaszufuhr geschlossenen Poren geeignet ist, und bei der die Luft im wesentlichen senkrecht auf einer starren, sich selbst tragenden, durch eine zum Teil perforierte elastische Membrane bespannte Tragfläche, etwa in deren Schwerpunkt oder Schwerlinie und in mindestens einem Umlenkbereich auftrifft und zu der gegenüber diesem Umlenkbereich um ein geringes Maß versetzten Peripherie hin mit abnehmendem Druck in das zu belüftende Abwasser geführt wird, wobei die Anordnung der Vorrichtung zur Flächenbelüftung parallel zur Wasseroberfläche des Belüftungsbeckens bei Hochlage des Schwerpunktes, d.h. bei konvexer Ausbildung, erfolgt.

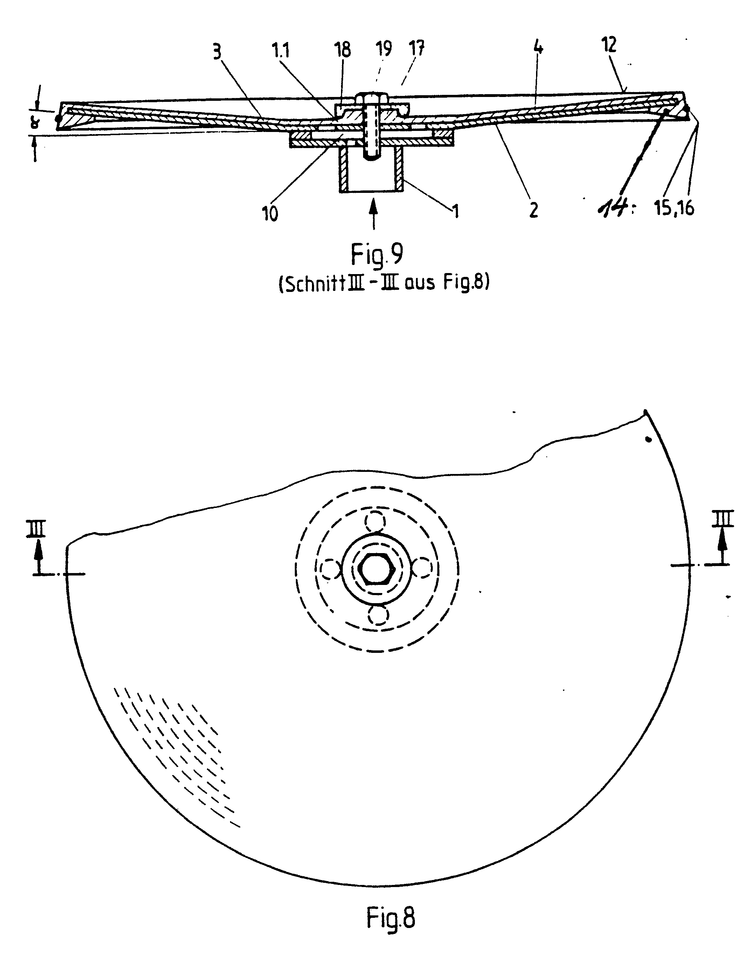

Eine solche Vorrichtung wird durch die DE-A-3 316 140 beschrieben, wobei insbesondere Anspruch 11 von besonderem Interesse, hier in Verbindung mit den Figuren 7 und 8, ist.

Nach Figur 7 ist ein Basiselement hinsichtlich seiner Dichtfläche (Tragfläche) konvex ausgebildet, auf der sich ein dehnbares Belüftungselement (Membrane) anlegen kann.

In diesem Fall kann in dem Bereich zwischen Basiselement und der aufliegenden Membrane kein Wasser eindringen, da die für die Gaszuführung bestimmte Öffnung des Basiselementes (Tragfläche) von einer geschlossenen Fläche des Belüftungselementes (Membrane) dicht verschlossen wird.

Ansonsten weist die Belüftungsplatte (Membrane) eine Vielzahl von Schlitzen auf, um so die gewünschte Gasabgabe zu ermöglichen. Die Verbindung zwischen der Membrane und der Tragfläche ist entsprechend dieser Figur 7 durch Verkleben, Verschweißen oder dergleichen im peripheren Bereich hergestellt.

Nach Figur 8 wird die Membrane durch Bildung einer umlaufenden Nut gesichert.

Gegen diese Konzeption spricht die nur am Rand des Belüfters gegebene periphere Verbindung mit der Tragfläche.

Eine Festlegung der Membrane im Zentrum oder im Bereich des Zentrums der konvexen Tragfläche ist nicht vorgesehen, so daß, verstärkt durch die in diesem Bereich nicht gegebene Perforation, eine starke Auswölbung der Membrane stattfindet, die, abhängig von Druck und auch von den Fertigungstoleranzen ihrer Dicke, eine größere oder kleinere luftabgebende Oberfläche aufweist.

Das Belüftungsbild ist nicht einheitlich.

Bedenkt man noch die bei konvexer Abgabefläche auseinanderführende Streuung der Luftbläschen zur Oberfläche des Belüftungsbeckens hin, so muß, zusammen mit den unterschiedlichen Oberflächengrößen, d. h. unterschiedliche Dehnung, mit einer sehr starken Dispersion der Luftbläschen gerechnet werden, so daß diese zwar leicht aufgenommen, aber umgekehrt die erforderliche kinetische Energie für eine zumindest bereichsweise einheitliche Aufnahme und die Kraft zur Erzeugung intensiver Verwirbelung und damit zur Trennung der Schmutzpartikelagglomerationen fehlen.

Diese Sachlage berücksichtigend, ist es Aufgabe dieser Erfindung, eine Vorrichtung zur Flächenbelüftung von Abwasser nach der eingangs beschriebenen Art zu nennen, mit der im Bereich der Belüfter eine gleichmäßigere und intensivere Belüftungswirkung erzielt wird.

Die erfindungegemäße Lösung dieser Aufgabe sieht vor,

daß der Schwerpunkt oder die Schwerlinie der Belüftungsfläche, bezogen auf die Oberfläche des Belüftungsbeckens, etwa in Tieflage der nach oben weisenden konkaven Vorrichtung zur Flächenbelüftung angeordnet ist, und

daß, ausgehend von dieser Tieflage, die Membrane mit der Tragfläche im Bereich der Luftzuführung fest verbunden ist.

Bei konkaver Ausbildung der Belüftungsfläche wird einmal eine konzentriertere Bündelung der abgegebenen Luft, und damit der aufsteigenden Luftströmung, sowie ein größerer kinetischer Energieinhalt vermittelt, so daß das Ziel, eine Auflösung der Konglomerate, weitgehend erreicht wird.

Die im Bereich der Luftzuführung gegebene Bindung an die Tragfläche führt darüberhinaus zu einer nahezu einheitlichen abgebenden Oberfläche, da die Wölbung der Membrane selbst in starkem Maße vereinheitlicht wird, so daß auch bei nicht zu vermeidenden Abweichungen der Dicke und evtl. sonstiger Materialkonstanten eine weitgehende Vereinheitlichung der Wölbungen, und damit der abgebenden Oberfläche, stattfindet.

Für die Verbindung ist vorgesehen,

daß der in Ausrichtung der Lage des Höhenversetzung zum Schwerpunkt oder der Schwerlinie führende Luftzuführanschluß ein mit Queraustrittsöffnungen versehener Rohrstutzen ist,

der der Membrane durch Schellen von oben verbunden ist.

Dieser von oben zum Zentrum vorgesehene Anschluß über Queraustrittsöffnungen am Ende des Rohrstutzens führt in einen knapp dimensionierbaren Luftumlenkbereich für die Strömung über.

Für eine rechteckige oder mehreckige Form der Tragfläche ist vorgesehen, daß diese in Richtung von deren Haupterstreckungsmaß einem geöffneten Kanal als Luftzuführungsanschluß verbunden ist, wobei die Membrane mit der Tragfläche über Klemmbrücken angeschlossen ist, und

daß bei zentralem Luftzuführungsanschluß von unten dieser konzentrisch erweitert und mit Randabstand der Tragfläche verbunden und die Membrane über eine Klemmscheibe und eine Schraube mit dem Boden der Erweiterung verschraubt ist, sowie innerhalb der Erweiterung Öffnungen für die Luftzuführung vorgesehen sind.

Es ist also vorgesehen, daß gegenüber der Tragfläche im Bereich des Luftzuführungsanschlusses zur Membrane wasserdicht abgesperrte Durchtrittsöffnungen für das Umgebungswasser angebracht sind.

Eine weitere, sinnvolle Ergänzung ist darin zu sehen, daß die Belüftungsfläche schwenkbar ausgebildet ist und, bezogen auf die Wasserfläche, bis zu ± 90° geneigt ausgebildet sein kann.

Dies ist insbesondere für die strahlgerichtete Belüftung schwer zugänglicher Beckenbereiche geeignet.

Auch die rotierende Ausbildung der Belüftungsfläche im oberen Schwerpunkt ist für eine trotz Bündelung beschleunigte Aufnahme des Belüftungsgases fallweise besonders effektvoll, da die entstehende rotierende Gaswalze und die Belüftungsfläche, an deren Schwerpunkt rotierend, in eine sich verbreiternde Wirbelschleppe überführt.

Im weiteren wird durch das Schutzbegehren auf besonders günstige Materialien für die Tragfläche und auf die Ausbildung und Materialien der Membrane hingewiesen, wobei eine elastische Membrane aus gewirktem oder gewebtem Kunststoff, z. B. auch aus Gummi, besondere Effekte, und zwar auch für nicht einheitlich ebene bzw. gleichmäßige Auflagen, bietet.

In manchen Fällen kann es auch zweckmäßig sein, daß das elastische Verhalten der Membrane vom Luftzuführungsanschluß bis zum äußeren Rand hin durch unterschiedliche Dicken einstellbar ist.

Es ist weiter vorgesehen, daß die Belüftungsfläche in sich selbst bis zu ± 90° geformt ausgebildet ist.

Durch diese Ausbildung werden die Forderungen der Aufgabenstellung nicht nur erfüllt, sondern in breitem Rahmen zweckmäßige Anwendung ausgewiesen.

Das erfindungsgemäße Vorrichtung wird anhand von erläuternden Darstellungen näher beschrieben.

Figur 1 zeigt den Grundriß der Vorrichtung in runder Form.

Figur 2 zeigt einen Schnitt durch Figur 1 in Richtung I-I.

Figur 3 zeigt den Grundriß einer rechteckigen Ausführung.

Figur 4 zeigt den Schnitt durch Figur 3 in Richtung II-II.

Figur 5 zeigt ein Detail der Luftzuführung von oben und die Umlenkzone.

Figur 6 zeigt ein Detail der Luftzuführung von unten und die Umlenkzone.

Figur 7 zeigt im Detail eine im Bereich der Schwerlinie kanalförmig ausgebildete Luftzuführung.

Figur 8 zeigt den Grundriß der Vorrichtung in runder Form.

Figur 9 zeigt einen Schnitt durch Figur 8 in Richtung III-III.

Figur 10 zeigt eine Draufsicht der Vorrichtung.

Figur 11 zeigt einen Schnitt durch Figur 10 in Richtung IV-IV.

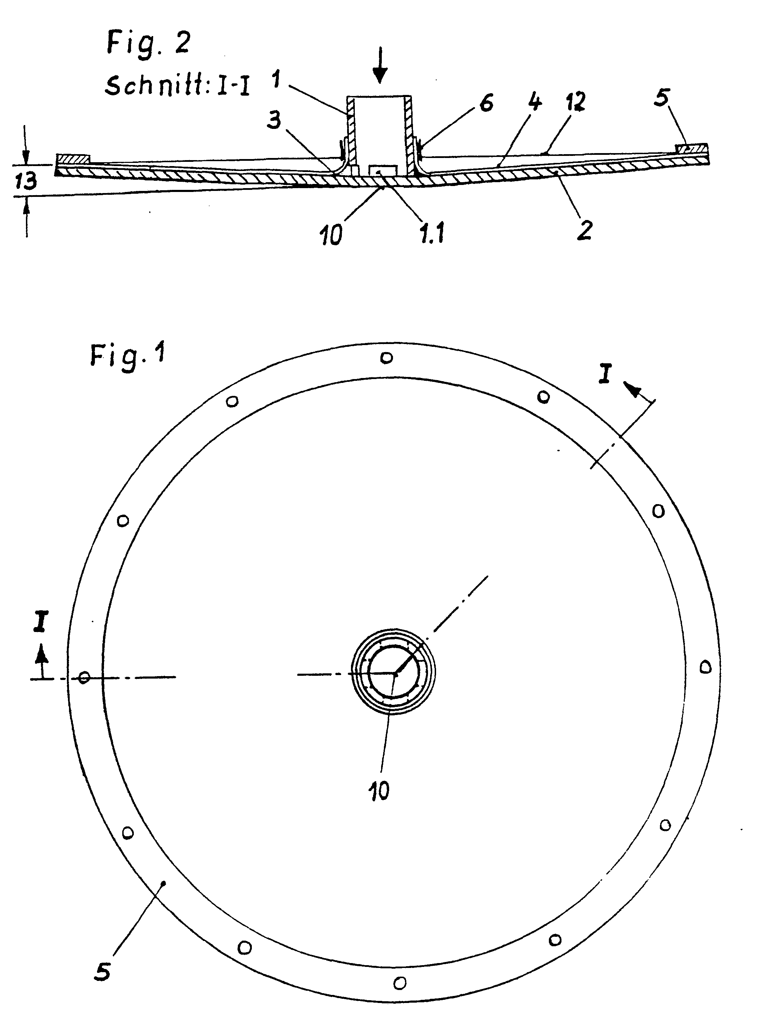

Die Luftzuführungen 1, wie sie durch die Figuren 1, 2 und 5 dargestellt sind, betreffen einen von oben zur starren Tragfläche 2 gerichteten, in der Regel im Schwerpunkt 10 angeordneten Einführungsstutzen, der im allgemeinen im Schwerpunkt der Fläche befestigt ist, und der, wie durch die Zeichnungen dargestellt, mit in den Umlenkbereich 3 gerichteten Queraustrittsöffnungen 1.1 versehen ist.

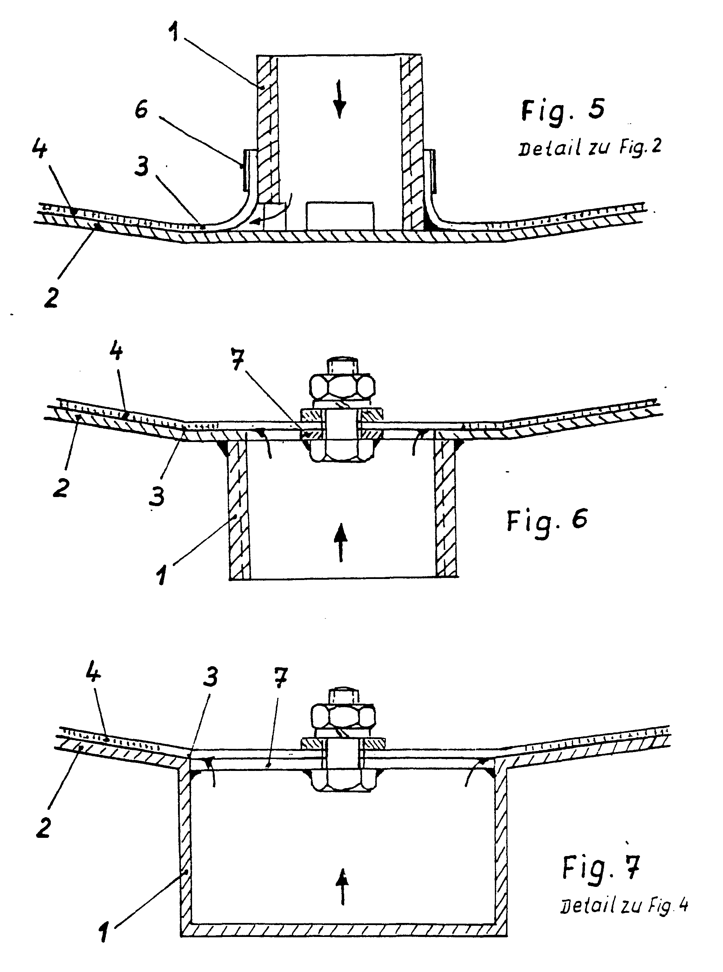

Der Tragfläche 2 liegt die elastische, perforierte Membrane 4 auf, die entlang der Peripherie 12 durch eine Klemmvorrichtung 5 und am Stutzen der Luftzuführung durch eine Schelle 6 fixiert ist. Im Falle einer Luftzuführung nach Figur 6 ist ebenfalls ein mit Innengewinde versehener Stutzen als Luftzuführung von unten der Tragfläche 2 angeschlossen, und der vom Stutzen eingeschlossene Teilbereich der Tragfläche 2 geöffnet. Die Verbindung mit der Membrane 4 erfolgt über eine mit im Stutzen nach oben bündig befestigte Klemmbrücke 7.

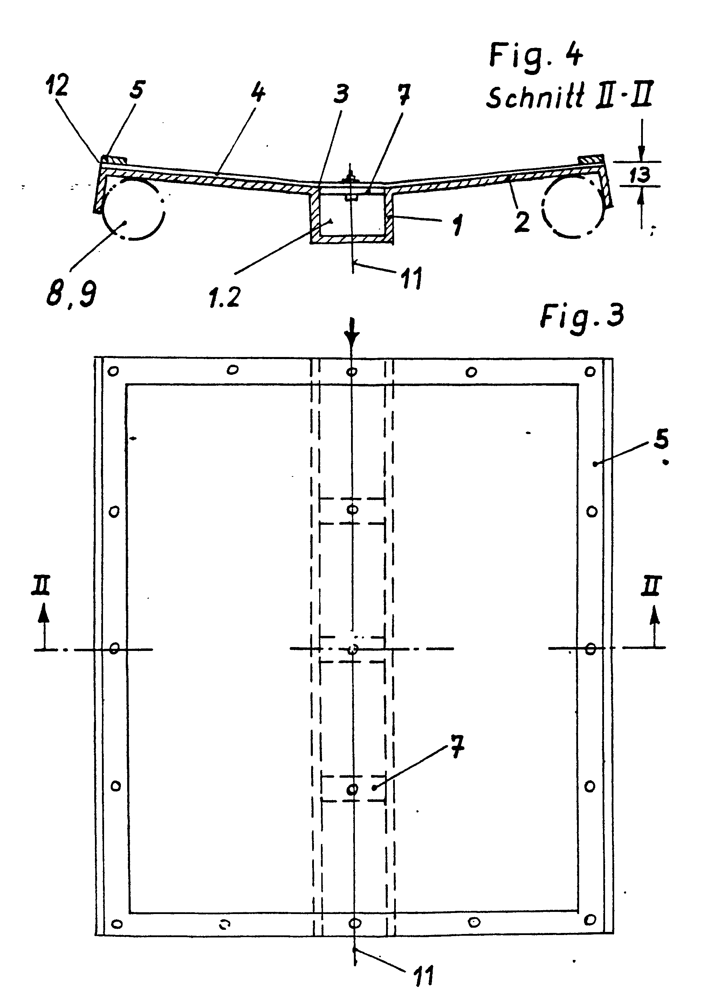

Die Ausführungen zu den Figuren 3 und 4 sehen für rechteckige Belüfter eine über deren Haupterstreckungsmaß, das in aller Regel mit einer Schwerlinie 11 identisch ist, einen zur Tragfläche 2 geöffneten Kanal 1.2 vor, in dem an beliebiger Stelle die Luft geleitet wird.

In dem peripheren Bereich ist der Kanal 1.2 nach außen abgeschlossen, und die Verbindung mit der Membrane 4 wird über den in den Kanal bündig zu der Tragflächenbegrenzung angeordneten klemmbrücken 7 hergestellt. Die statische Stabilität der Tragfläche 2 ist neben der Materialauswahl und deren Dickendimensionierung, vom Maß der Höhenversetzung 13 zwischen der Tiefenbegrenzung im Schwerpunkt 10 oder einer Schwerlinie 11 und der Peripherie 12 der Tragfläche 2 abhängig.

Die Formgebung der Neigung ist den Querschnittslinien durch die Tragfläche zu entnehmen; sie verläuft im allgemeinen geradlinig, kann aber auch in Richtung der Erhöhung krefsförmig/konkav/konvex oder kreiskalottenförmig/ geformt ausgebildet sein.

Die Vorrichtung kann mit mindestens einem aufblasbaren oder festen Schwimmkörper 8/9 versehen werden, so daß der Belüfter auch bei gefülltem Becken an die Oberfläche transportiert werden kann.

Die elastischen Schwimmkörper weden vor dem Herausnehmen der Belüftungseinrichtung über eine Rohr- oder Schlauchleitung gefüllt und schwimmen somit bei Entfernung der Arretierung der Belüftungseinrichtung im Becken an die Wasseroberfläche.

Die Ausführungen zu den Figuren 8 und 9 sehen für runde Belüfter in einer anderen Ausführungsform wie vorher beschrieben, die Luftzuführung 1 mit einem von unten zur starren Tragfläche 2 gerichteten, in der Regel im Schwerpunkt 10 angeordneten Einführungsstutzen vor, der im allgemeinen im Schwerpunkt der Fläche befestigt ist.

Der Tragfläche 2 liegt die elastische, perforierte Membrane 4 auf, die entlang der Peripherie 12 mit einer Dichtmanschette 14 mit der starren Tragfläche verbunden ist. Diese Dichtmanschette 14 weist eine umlaufende Nut 15 auf, in der eine umlaufende Schelle 16 angebracht ist. Im Zentrum der Membrane 4 weist diese eine Verdickung 17 auf, wo diese mit einer Klemmscheibe mit Wulst 18 und einer Schraube 19 mit der starren Tragfläche 2 verbunden ist.

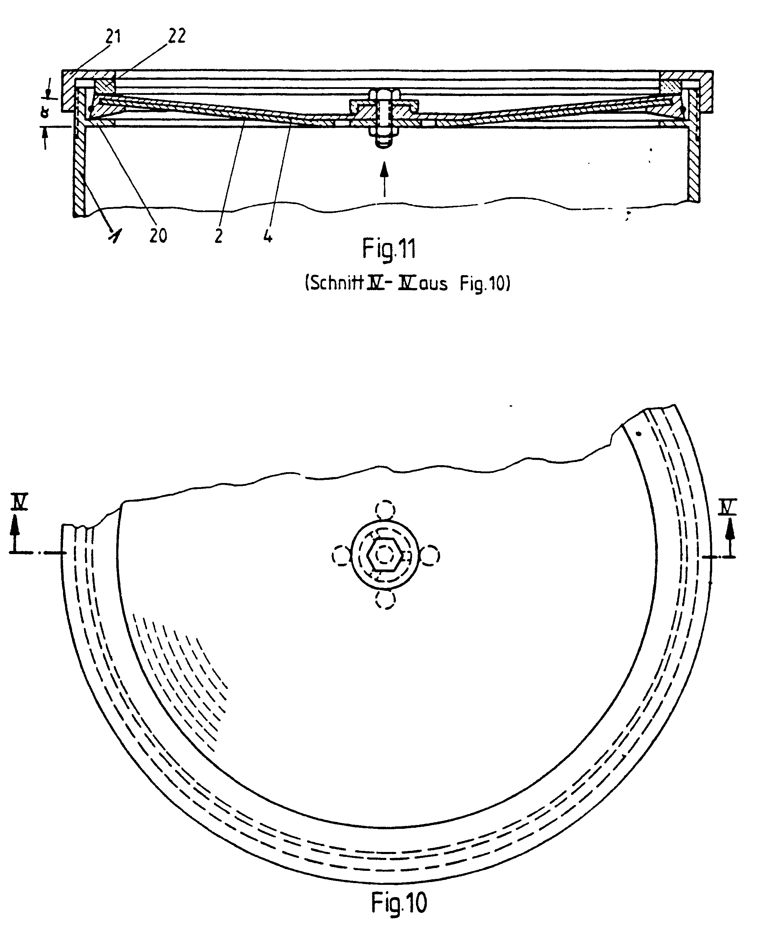

Im Falle einer Luftzuführung 1 nach Figur 10 und 11 ist ein mit Gewinde versehener Stutzen mit Bund 20 vorgesehen, bei dem die Tragfläche 2 mit der Membrane 4 aufliegt und mit einem Schraubkragen 21 und einem Druckring 22 gehalten wird.

Nicht gezeichnet ist die Lageeinstellung der Belüftungseinrichtung.

Diese wird durch Zugstangen, Seile, Gelenke oder sonstige bekannte Einrichtungen fixiert, wobei die aufblasbaren Schwimmkörper letztlich den Vorteil haben, daß bei gleichgewichtiger Anordnung und gleichem Füllgrad letztlich die Höhenlage des Belüfters auch ohne tragende Elemente praktisch schwebend eingestellt werden kann. Um fallweise eine Zirkulation der Wasserströmung durch die Belüfterebene zu ermöglichen, können Durchbrüche durch diese Ebene, beispielsweise im Bereich der Luftzuführung 1, vorgesehen werden, wobei diese zwischen Trsgfläche und Membrane gegen eindringendes Wassers abgedichtet sein müssen.

Abschließend ist noch zu erwähnen, daß die Steifigkeit der Tragflächen durch eingeprägte Sicken fallweise erhöht werden kann, wobei man allerdings die Überdeckung der Sicken durch die Membrane 4 bei Ausbildung der Perforation berücksichtigen muß.

**Patentansprüche**

1. Vorrichtung zur Flächenbelüftung, die insbesondere zur intermittierenden Belüftung aufgrund der bei fehlender oder geringer Gaszufuhr geschlossenen Poren geeignet ist, und bei der die Luft im wesentlichen senkrecht auf einer starren, sich selbst tragenden, durch eine zum Teil perforierte elastische Membrane (4) bespannte Tragfläche (2), etwa in deren Schwerpunkt (10) oder Schwerlinie (11) und in mindestens einem Umlenkbereich (3) auftrifft und zu der gegenüber diesem Umlenkbereich um ein geringes Maß versetzten Peripherie (12) hin mit abnehmendem Druck in das zu belüftende Abwasser geführt wird, wobei die Anordnung der Vorrichtung zur Flächenbelüftung parallel zur Wasseroberfläche des Belüftungsbeckens bei Hochlage des Schwerpunktes, d.h. bei konvexer Ausbildung, erfolgt, dadurch gekennzeichnet,

daß der Schwerpunkt (10) oder die Schwerlinie (11) der Belüftungsfläche (2/4), bezogen auf die Oberfläche des Belüftungsbeckens, etwa in Tieflage der nach oben weisenden konkaven Vorrichtung zur Flächenbelüftung angeordnet ist, und

daß, ausgehend von dieser Tieflage, die Membrane (4) mit der Tragfläche (2) im Bereich der Luftzuführung fest verbunden ist.

2. Vorrichtung nach Anspruch 1, dadurch gekennzeichnet,

daß der in Ausrichtung der Lage der Höhenversetzung zum Schwerpunkt (10) oder der Schwerlinie (11) führende Luftzuführanschluß ein mit Queraustrittsöffnungen (1.1) versehener Rohrstutzen (1) ist, der der Membrane (4) durch Schellen (6) von oben verbunden ist.

3. Vorrichtung nach Anspruch 1, dadurch gekennzeichnet,

daß eine rechteckige oder mehreckige Form der Tragfläche (2) in hichtung von deren Haupterstreckungsmaß einem geöffneten Kanal (1.2) als Luftzuführungsanschluß (1) verbunden ist, wobei die Membrane (4), mit der Tragfläche (2) über Klemmbrücken (7) angeschlossen ist, und

daß bei zentralem Luftzuführungsanschluß (1) von unten dieser konzentrisch erweitert und mit Randabstand der Tragfläche (2) verbunden und die Membrane (4) über eine Klemmscheibe (18) und eine Schraube (19) mit dem Boden der Erweiterung verschraubt ist, sowie innerhalb der Erweiterung Öffnungen für die Luftzuführung vorgesehen sind.

4. Vorrichtung nach den Ansprüchen 1 bis 3, dadurch gekennzeichnet,

daß im Bereich des Luftzuführungsanschlusses (1) zur Tragfläche (2) und zur Membrane (4) wasserdicht abgesperrte Durchtrittsöffnungen für das Umgebungswasser angebracht sind.

5. Vorrichtung nach Anspruch 1 und 2, dadurch gekennzeichnet,

daß die Belüftungsfläche (2/4) schwenkbar ausgebildet ist und, bezogen auf die Wasserfläche, bis zu ± 90° geneigt ausgebildet sein kann.

6. Vorrichtung nach Anspruch 1 und 2, dadurch gekennzeichnet,

daß die Belüftungsfläche (2/4) im oberen Schwerpunkt (10) rotierend ausgebildet ist.

7. Vorrichtung nach Anspruch 1 und 2, dadurch gekennzeichnet,

daß die Tragfläche (2) aus Edelstahl, porösem oder gesintertem Material, Kunstoff oder dgl. Stoffen hergestellt ist.

8. Vorrichtung nach Anspruch 1 und 2, dadurch gekennzeichnet,

daß die elastische Membrane (4) aus gewirktem oder gewebtem Kunststoff und/oder aus Gummi besteht.

9. Vorrichtung nach Anspruch 1 und 2, dadurch gekennzeichnet,

daß die Membrane (4) eine Metallfolie ist.

10. Vorrichtung nach Anspruch 1 und 2, dadurch gekennzeichnet,

daß die Perforation der Membrane (4) aus Lochungen, schlitz-, ster - oder kreuzförmig ausgebildeter Einschnitte besteht.

11. Vorrichtung nach Anspruch 1 und 8, dadurch gekennzeichnet,

daß das elastische Verhalten der Membrane (4) vom Luftzuführungsanschluß (1) bis zum äußeren Rand hin durch unterschiedliche Dicken der Membrane einstellbar ist.

12. Vorrichtung nach Anspruch 5, dadurch ge kennzeichnet,

daß die Belüftungsfläche in sich selbst bis zu ± 90° geformt ausgebildet ist.

## Claims

1. An apparatus for use with surface aeration which is especially suitable for intermittent aeration in view of the pores closed in the event of no or a low gas supply, wherein the air is fed in substantially vertical fashion, onto a rigid self-supporting bearing face (2) covered by a partly perforated flexible diaphragm (4) approximately into the central portion (10to) or central line (11) of said bearing face (2) and into at least one deflection zone (3) and toward periphery (12) out of alignment with the said deflection zone by a small amount is passed with a decreasing pressure into the waste water to be aerated, with the arrangement of the apparatus for surface aeration in parallel to the water surface of the aeration tank being effected in a high position of the central portion, i.e. in a convex configuration,
characeirzed in
that the center of gravity (10) or central line (1t) of the aeration surface (2/4), based on the surface of the aeration tank, is arranged approximately in the low position of the upwardly facing concave apparatus for surface aeration, and
that, based on the said low position, the diaphragm (4) is rigidly connected to the supporting face (2) in the zone of the air supply.
2. An apparatus as defined in claim 1,
characterized in
that the air supply connection leading in aligning the position out of register, to the central portion (10) or the central line (11), is a flanged nozzle (1) provided with transverse outlets (1.1) and connected, from the top, to the diaphragm (4) through clips (6).
3. An apparatus according to claim 1,
characterized in
that a rectangular or polygonal configuration of the supporting face (2), in the direction of the main dimension thereof, is connected to an. open channel (1, 2) forming an air supply connection (1), with the diaphragm (4) being connected to the supporting face (2) through clamping bridges (7), and

that in a central air supply connection (1), the same is concentrically expanded from the bottom and, at a distance to the edge, is connected to the supporting face (2), with the diaphragm (4), through a clamping disc (18) and a nut (19), being screwed to the bottom of the expansion, and with ports for the air supply being provided within the expansion.
4. An apparatus according to claims 1 to 3, characterized in
that, in the zone of the air supply connection (1) to the supporting face (2) and to the diaphragm (4), passage openings for the environmental water blocked in watertight fashion are provided.
5. An apparatus according to claims 1 and 2, characterized in
that the aeration face (2/4) is of a swiveling configuration and with regard to the water surface is inclined at an angle of up to ± 90°.
6. An apparatus according to claims 1 and 2, characterized in
that the aeration face (2/4), in the upper central portion (10), is formed to rotate.
7. An apparatus according to claims 1 and 2, characterized in
that the supporting face (2) is made of stainless steel, porous or sintered material, plastic or the like materials.
8. An apparatus according to claims 1 and 2, characterized in
that the elastic diaphragm (4) is made of knitted or woven plastic and/or rubber.
9. An apparatus according to claims 1 and 2, characterized in
that the diaphragm (4) is a metal foil.
10. An apparatus according to claims 1 and 2, characterized in
that the perforation of the diaphragm (4) exhibits orifices and cuts of slit-, staror cross-type configuration.
11. An apparatus according to claims 1 and 8, characterized in
that the flexible character of the diaphragm (4), from the air supply nozzle (1) to the outer rim, is adjustable through different thicknesses of the diaphragm.
12. An apparatus according to claim 5, characterized in
that the aeration face, in itself, is formed at an angle of up to ± 90°.

## Revendications

1. Dispositif pour l'aération de surfaces qui convient en particulier à l'aération intermittente due à des pores fermés lorsque l'amenée de gaz est absente ou faible, et dans lequel l'air rencontre, de manière sensiblement perpendiculaire, une surface d'appui (2) qui est rigide et autoporteuse et sur laquelle est tendue une membrane élastique (4) partiellement perforée, et ce, sensiblement en son centre de gravité (10) ou selon sa ligne de gravité (11), et au moins une zone de déviation (3), et est amené dans l'eau usée à aérer sous une pression décroissante vers la périphérie (12) qui est faiblement décalée par rapport à cette zone de déviation, le dispositif d'aération des surfaces étant disposé parallèlement à la surface de l'eau du bassin d'aération lorsque le centre de gravité est en position haute, c'est-à-dire lorsque sa conformation est convexe, caractérisé par le fait que le centre de gravité (10) ou la ligne de gravité (11) de la surface d'aération (2/4), rapportée à la surface du bassin d'aération, est disposée sensiblement au point le plus bas du dispositif d'aération des surfaces concave et dirigé vers le haut, et par le fait qu'en partant de ce point le plus bas, la membrane (4) est reliée rigidement à la surface d'appui (2) dans la région de l'amenée d'air.

2. Dispositif selon la revendication 1, caractérisé par le fait que le raccordement de l'amenée d'air conduisant au réglage du décalage en hauteur par rapport au centre de gravité (10) ou à la ligne de gravité (11) est constitué par une tubulure (1) qui est munie d'ouvertures de sortie transversale (1.1) et qui est reliée à la membrane (4) par le haut au moyen de colliers (6).

3. Dispositif selon la revendication 1, caractérisé par le fait qu'une forme rectangulaire ou polygonale de la surface d'appui (2) est reliée à un canal ouvert (1.2) qui s'étend selon la direction de sa plus grande dimension et qui sert de raccordement d'amenée d'air (1), la membrane (4) étant reliée à la surface d'appui (2) par des pontets de serrage (7), et par le fait que, pour un raccordement d'amenée d'air (1) central et par le bas, celui-ci s'élargit de manière concentrique et est relié à distance du bord à la surface d'appui (2), la membrane (4) étant vissée sur le fond de l'élargissement par un disque de serrage (18) et une vis (19), et des ouvertures étant prévues en outre pour l'amenée d'air à l'intérieur de l'élargissement.

4. Dispositif selon les revendications 1 à 3, caractérisé par le fait que des ouvertures de passage étanches à l'eau par rapport à la surface d'appui (2) sont ménagées dans la région du raccordement d'amenée d'air (1) vers la membrane (4) pour l'eau environnante.

5. Dispositif selon la revendication 1 et 2, caractérisé par le fait que la surface d'aération (2/4) est réalisée de façon à pouvoir basculer et de façon à pouvoir être inclinée jusqu'à $\pm$ 90° par rapport à la surface de l'eau.

6. Dispositif selon la revendication 1 et 2, caractérisé par le fait que la surface d'aération (2/4) est réalisée de façon tournante en son centre de gravité supérieur (10).

7. Dispositif selon la revendication 1 et 2, caractérisé par le fait que la surface d'appui (2) est fabriquée en acier spécial, en un matériau poreux ou fritté, en matière plastique ou en une matière similaire.

8. Dispositif selon la revendication 1 et 2, caractérisé par le fait que la membrane élastique (4) est constituée en une matière synthétique tricotée ou tissée et/ou en caoutchouc.

9. Dispositif selon la revendication 1 et 2, caractérisé par le fait que la membrane (4) est une feuille de métal.

10. Dispositif selon la revendication 1 et 2, caractérisé par le fait que les perforations de la membrane (4) se composent de trous ou d'incisions en forme de fentes, d'étoiles ou de croix.

11. Dispositif selon la revendication 1 et 8, caractérisé par le fait que le comportement élastique de la membrane (4) peut être réglé grâce au fait que la membrane présente des épaisseurs différentes depuis le raccordement d'amenée d'air (1) jusqu'au bord extérieur.

12. Dispositif selon la revendication 5, caractérisé par le fait que la surface d'aération est réalisée de façon à présenter elle-même une forme allant jusqu'à $\pm$ 90°.

Fig. 2

Schnitt: I-I

Fig. 1

Fig. 4

Schnitt II·II

12   5   4   3   7

13

8,9   1.2   1   2   11

Fig. 3

5

II   II

7

11

Fig. 5
Detail zu Fig. 2

Fig. 6

Fig. 7
Detail zu Fig. 4

3  1.1  18  19  17  4  12

δ

10  1  2  14:  15,16

**Fig.9**
(Schnitt III – III aus Fig.8)

III  III

**Fig.8**

Fig. 11

(Schnitt Ⅳ- Ⅳ aus Fig.10)

Fig. 10